# EUROPEAN PATENT APPLICATION

(11) **EP 1 557 452 A1**
(43) Date of publication of application: **27.07.2005**
(21) Application number: 04250256.7
(22) Date of filing: 20.01.2004
(51) Int. Cl.: C09J 7/04, C09J 5/06

(54) **Method of bonding a water-activated adhesive sheet**

(71) Applicant: Meinan Machinery Works, Inc., Obushi-shi, Aichi 474-8543 (JP)
(72) Inventor: Tsutsui, Mikio, Obu-shi, Aichi 474-8543 (JP)
(74) Representative: Haley, Stephen

(57) **Abstract**

Method of bonding a water-activated adhesive sheet to the desired surface of an object is disclosed. The adhesive sheet is made of a backing and a layer of water-activated adhesive disposed on one side of the backing. The method of the invention comprises pressing the water-activated adhesive sheet against the desired surface without moistening the water-activated adhesive layer, and simultaneously heating the adhesive sheet. The water-activated adhesive sheet is heated at a temperature of at least 100°C for at least 0.3 second under a pressure of at least 3.2 kg/cm². The method of the invention is applicable to jointing wood veneer sheets which are dried to such an extent that is suitable for lamination to produce plywood, laminated veneer lumber (LVL) or other wood composite materials.

## Description

The present invention relates to a method of bonding a water-activated adhesive sheet to the surface of an object.

Water-activated adhesive sheet, which has a base sheet or a backing usually made of paper and a layer of water-activated adhesive coated on one side of the backing, is available in various forms and used for a wide variety of applications. Typical well-known applications of such adhesive sheet include postage stamps, envelope flaps, sticky labels used as index tab or other usage, bindery or sealing gummed tapes, etc. Water-activated sheet specifically in the form of a tape is widely used in the field of processing of wood veneer to be used for production of plywood, LVL (laminated veneer lumber) and other wood composite products, for the purpose of jointing or strengthening sheets of veneer.

Backing of the water-activated adhesive sheet is made of any suitable material such as paper, while the adhesive thereof is usually made of water soluble polymers such as casein, starch, polyvinyl alcohol, polyvinyl ether, polyacrylate, etc. For application of the adhesive sheet to the desired surface, the adhesive is moistened by water, steam or saliva in the case of postage stamps so that water-soluble polymer is dissolved and the adhesive layer becomes tacky. The moistened adhesive sheet is then applied with pressure to the surface and bonding of the sheet is completed when moisture in the adhesive is evaporated or absorbed by the body to which the tape is applied. As required, the adhesive sheet may be removed from the surface by moistening the water-activated adhesive again.

However, the water-activated adhesive sheet is disadvantageous in that it takes a certain length of time, usually 5 to 10 seconds, before adhesion of the sheet becomes effective after application of water to the adhesive layer of the sheet. On the other hand, as would be understood from a case that an excessively moistened postage stamp tends to slide off the affixing position on a postcard, if too much water is applied to the adhesive, it takes a longer time for the water to be evaporated or absorbed and, therefore, a longer time is required before complete adhesion is accomplished. Furthermore, if moistened adhesive sheet is left or exposed to the air as it is for a certain length of time, the moistening water is dried and adhesion of the sheet is lost before application. Thus, water-activated adhesive sheet has problems in terms of the ease of application.

However, the ease of application of water-activated sheet depends on the condition of the surface to which the sheet is to be bonded. In the process of veneer production, it is practiced that veneer in the form of a continuous ribbon just as peeled from a wood block by a rotary veneer lathe is reeled or wound directly into a roll and a plurality of such rolls are stored for certain lengths of time (or tens of minutes to a couple of hours) before the veneer roll is unreeled for the subsequent process. For the purpose of reinforcing the veneer sheet, water-activated adhesive tapes may be attached to the surface of veneer sheet adjacent to the opposite ends thereof spaced along the wood grain of veneer and the adhesive tape is reeled together with veneer sheet. In such a case where the veneer as peeled from a wood block is green or undried and hence having a relatively high content of moisture, the water-activated adhesive tape applied to the surface can take up some moisture from the veneer and, therefore, no water needs be applied to the tape. Because of the nature of veneer reeling operation, the surface of green veneer sheet will not be dried before the adhesive tape is applied to the surface and hence there is no fear that the adhesion of the tape is lost before its application to veneer sheet. Thus, the operation of bonding water-activated adhesive tape to green veneer can be accomplished relatively easily, although adhesion is not necessarily completed during unreeling and the adhesion becomes complete after the unreeling operation. This manner of bonding the water-activated tape to the surface of green veneer is free from the above-described problems because the object to which the tape is to be applied contains moisture sufficient for the water-activated adhesive and contact of the tape and the surface can be maintained until the veneer sheet is unreeled from the veneer roll. However, such usage of the water-activated adhesive tape is not applicable to dried veneer.

For production of plywood or LVL panels by gluing and laminating a plurality of veneer sheets, the veneer sheets must be dried appropriately. For example, when using urea-based adhesives for lamination, veneer sheets for core stock should be dried to about 12% of moisture content and face and back veneer sheets to about 8%, respectively. When water-proof adhesives such as melamine or phenolic resin is used, veneer should be dried to less than 12% or they may be even completely dried to 0%. Considering that veneer with moisture content of about 15% or less is usable for production of plywood or other wood composite products, water-activated adhesive tape can hardly be moistened enough by such low moisture content to exhibit good adhesion. Therefore, when applying water-activated adhesive tape to dried veneer, the tape may have to be artificially moistened. In such a case, the use of such adhesive tape will suffer from the above-mentioned problems and disadvantages.

Various methods and apparatuses of jointing a plurality of veneer sheets by applying adhesive tape to the top or both surfaces of such veneer sheets are known in the art of veneer processing. For example, dried veneer sheets previously cut into rectangular shapes with various widths as measured across the wood grain orientation of veneer are arranged one after another in end-to-end relation and then spliced or jointed by means of water-activated adhesive tape so as to provide a wider jointed veneer sheet. An example of method and apparatus of bonding water-activated adhesive tape to veneer sheets is disclosed by Japanese patent publication S49-41090. According to this prior art, water-activated adhesive tape unwound from a tape reel is passed through a moistening device to be applied with water and then presented to a pressure roll which applies the adhesive tape to veneer surface. The moistening device is located at such a spaced distance from the pressure roll so that it takes time long enough for the water-activated adhesive on the tape to exhibits its good adhesion when it is just applied by the pressure roller to the veneer surface. Additionally, a tube is provided to cover the a length of adhesive tape moving between the moistening device and the pressure roll for preventing the water on adhesive tape from being evaporated under the external influences such as wind and ambient temperature.

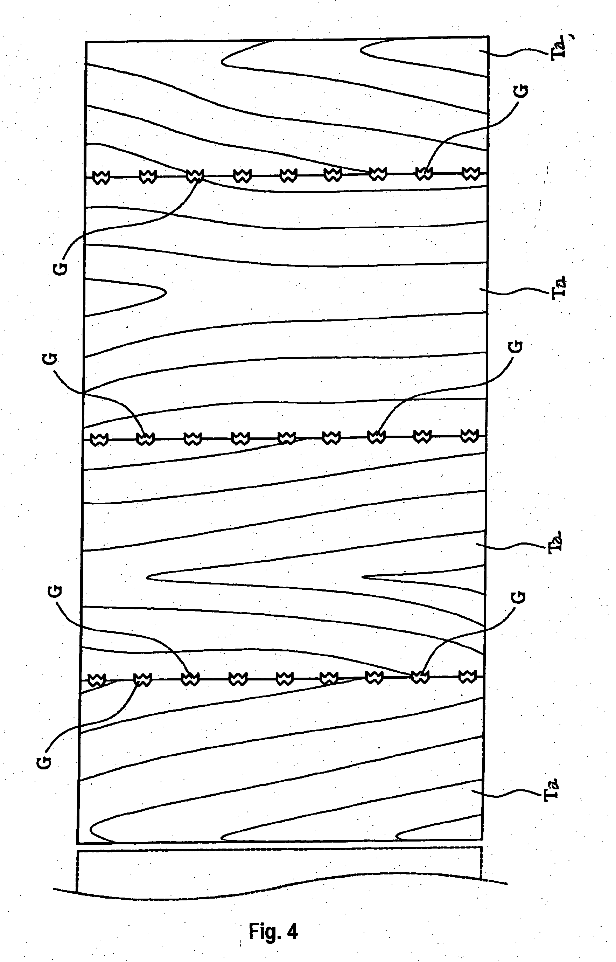

With this method and apparatus, however, it is difficult to maintain the adhesive tape always in optimum condition for good adhesion because the tape tends to be dried when it is exposed to the air outside the tube adjacent to the pressure roll. Additionally, the adhesive tape whose backing is usually made of paper tends to become weak or to decrease its strength when it is wetted by moistening and, therefore, it has been extremely difficult to apply the tape on veneer surface in the form of cut pieces, for example, as shown in FIG 4.

Adhesive means other than water-activated adhesive tape such as pressure-sensitive adhesive tape or threads or wires coated or impregnated with thermoplastic adhesive are used for veneer jointing. However, these materials are disadvantageous in terms of cost in comparison with the water-activated tape.

The present invention has been made to solve the problems associated with water-activated adhesive sheet for facilitating the process of bonding such adhesive sheet to the desired surface. Specifically, the invention resides in a method of bonding a water-activated adhesive sheet to the desired surface of an object, for example, the surface of dried veneer, without moistening the water-activated adhesive layer of the sheet. According to the invention, bonding of the water-activated adhesive sheet to the surface can be accomplished merely by pressing the adhesive sheet against the surface while simultaneously applying heat thereto. According to the results of experiments conducted by the inventor, the temperature for application to the adhesive sheet should be at least 100°C and heating under pressure should be continued for at least 0.3 seconds. The pressure for application to the water-activated sheet should be at least 3.2 kg/cm².

Thus, the method according to the invention can dispense with moistening which has been performed conventionally prior to application of the sheet to the desired surface. Merely heating the adhesive sheet softens its water-activated adhesive, so that it exhibits adhesiveness and the sheet is applied to the surface under pressure. As the heating is stopped, softening of the adhesive is also stopped and bonding of the adhesive sheet to the surface is completed.

Features and advantages of the present invention will become more apparent to those skilled in the art from the following description of the invention, which description is made with reference to the accompanying drawings, wherein:
FIG 1 is a front schematic view showing testing equipment used by the inventor for adhesion testing;
FIG 2 is a side schematic view showing a veneer jointing apparatus disposed on the downstream side of a veneer clipper, for performing the method of the present invention;
FIGS. 3A through 3D are side views showing the veneer clipper of FIG 2 and describing a series of steps of veneer cutting operation;
FIG 4 is a top view of veneer sheets jointed by the apparatus of FIG 2;
FIG 5 is a side schematic view showing a modification of the veneer jointing apparatus for practicing the method of the present invention; and
FIG 6 is a side schematic view showing still another form of veneer jointing apparatus.

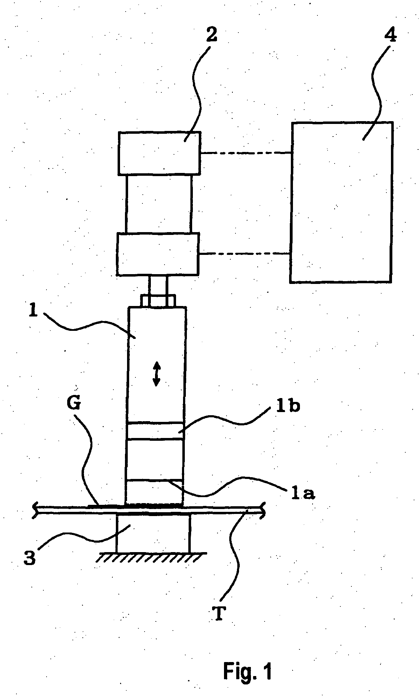

Referring firstly to FIG 1 showing the adhesion testing equipment, this was made in the course of development of the veneer jointing apparatus for the purpose of testing adhesion of water-activated adhesive sheet to the surface of wood veneer which has been dried appropriately previously. In the drawing, the test equipment includes a heating member 1 which has a heat insulation 1b and a pressing surface 1a and is movable vertically reciprocally as indicated by double-headed arrow. This heating member 1 serves also as a pressing member for applying pressure to the adhesive tape. Though not shown in the drawing, the heating member 1 has incorporated therein a variable-temperature electrical heater adjacent to the heating surface 1a. Below the heating surface 1a is located a stationary support 3 for supporting thereon a veneer sheet T. For the reciprocal movement, the heating member 1 is connected to a fluid-operated cylinder 2 which is in turn connected to a control 4 for controlling the pressure exerted by the cylinder 2 to the heating member 1 and the length of heating time. In the testing, a veneer sheet T having a water-activated gummed tape G placed on the top surface thereof is set on the support 3 and the heating member 1 is lowered to its operative dotted-line position to press and heat the tape G against the veneer sheet T.

For the testing, veneer of red meranti (wood species name) and water-activated adhesive tape VGXW of Lintec Corporation (Japan) was used. The testing was conducted under various pressing and heating conditions using veneer sheets having various moisture contents to find out feasible bonding conditions for affixing securely a water-activated adhesive tape to dried veneer sheet. Results from the adhesion testing are shown in the following tables.

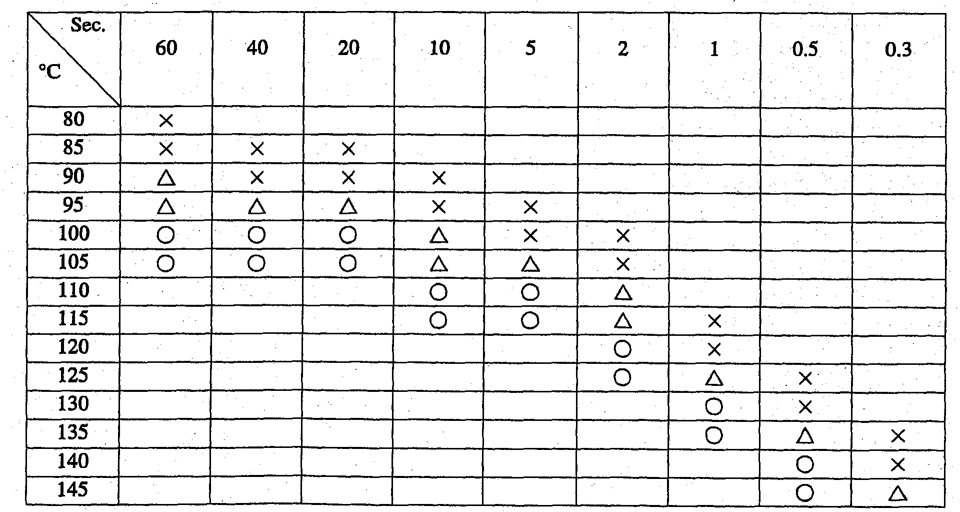

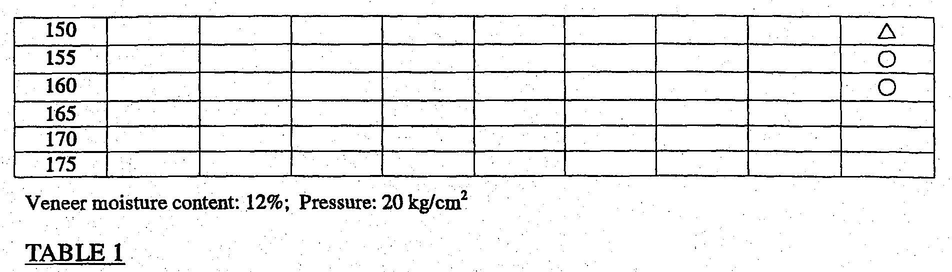

TABLE 1 shows the results of testing conducted using veneer with about 12% moisture content and under a pressure of about 20 kg/cm². Heating temperature and length of time for heating were varied as shown in the table. In the table, adhesion results are indicated by three different markings. Namely, ○ designates "good" with strong adhesion throughout the tape, Δ "slightly poor" only with partially strong adhesion of the tape to the veneer surface, and × "poor" with weak or incomplete adhesion, respectively. The adhesion results designated by symbol Δ may be regarded fair or moderately good because partially strong bonding could be achieved. In view of safety, however, it was considered as "slightly poor."

As appreciated from the table, good adhesion could be achieved by heating time of 60 seconds, 40 seconds and 20 seconds, respectively, when the heating temperature was at least 100°C. When the temperature was increased to at least 110°C, successful adhesion could be accomplished by 10 seconds and 5 seconds, respectively. With the temperature further increased to at least 155°C, the heating time could be reduced to 0.3 second.

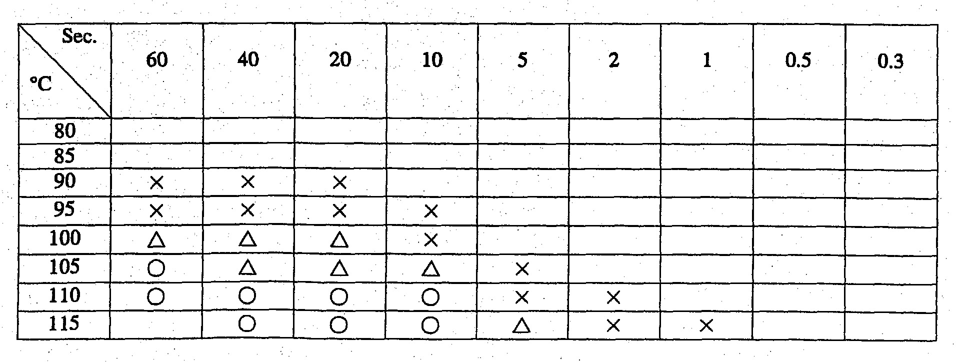

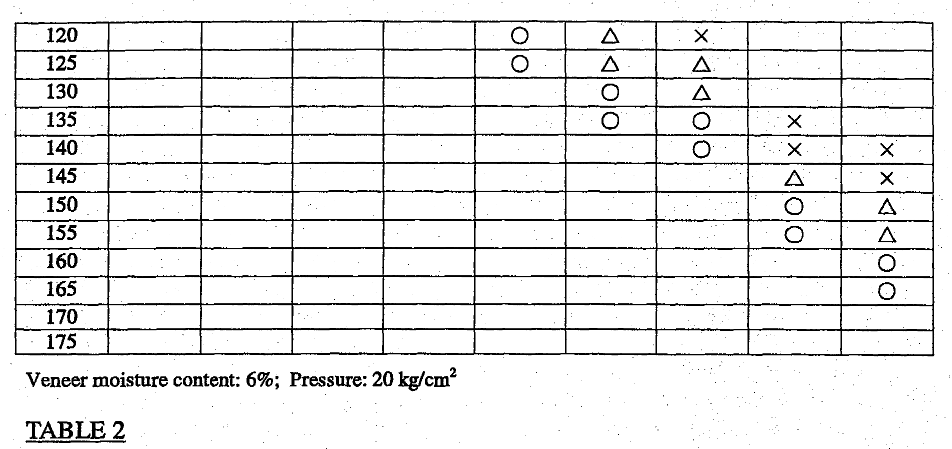

TABLE 2 shows the results of testing conducted using veneer with about 6% moisture content and under the same pressure of about 20 kg/cm². In this testing, the adhesive tape could be bonded successfully to the veneer surface with heating time of 40 seconds, 20 seconds and 10 seconds, respectively, under a heating temperature of at least 110°C. When the temperature was increased to at least 120°C, good adhesion could be accomplished even with shortened heating time of 5 seconds. When the heating temperature was further increased to at least 160°C, the time could be further reduced to 0.3 second for successful adhesion.

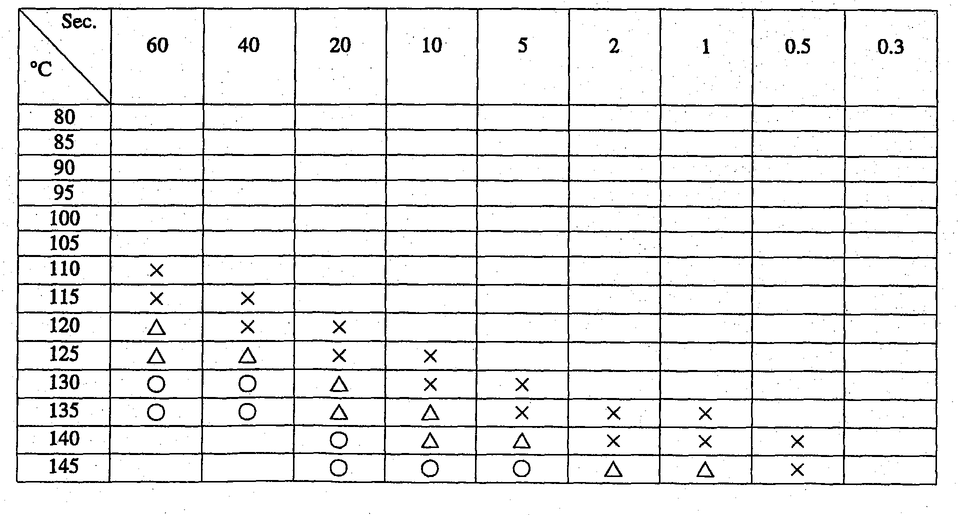

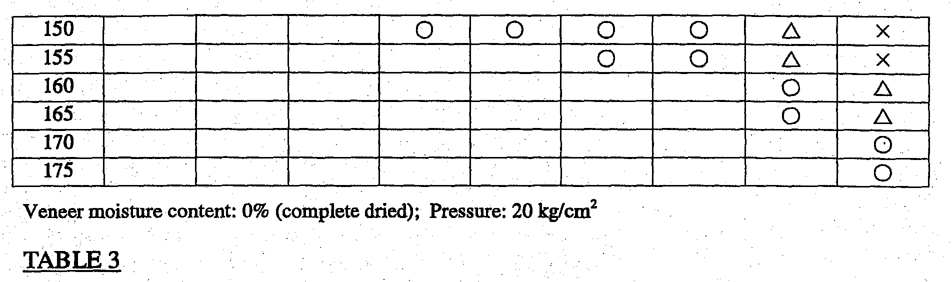

TABLE 3 shows the results of testing conducted using substantially completely dried veneer, or with about 0% moisture content, and under the same pressure of about 20 kg/cm². As understood from the table, the tape could bonded to the surface successfully by heating for 60 seconds and 40 seconds, respectively, under a heating temperature of at least 130°C. When the temperature was raised to at least 145°C, good adhesion could be accomplished by heating for 20 seconds, 10 seconds and 5 seconds, respectively. When the temperature was increased further to at least 170°C, the heating time for successful bonding could be reduced to 0.3 second.

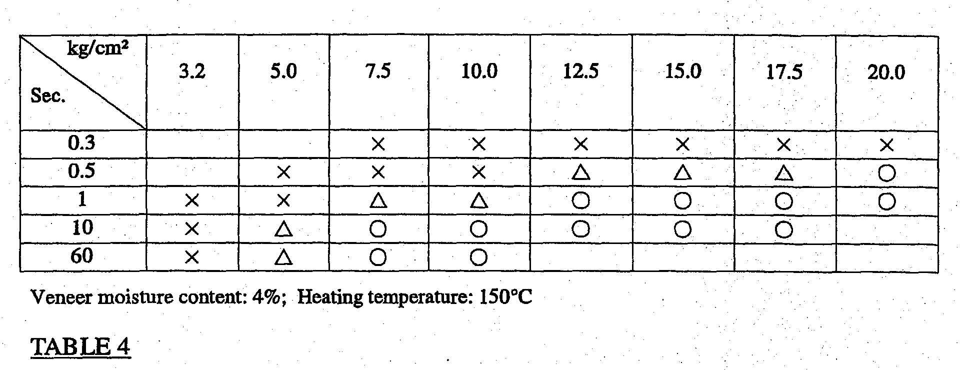

In the testing of TABLE 4, the pressures during heating and the lengths of time for heating were varied. Veneer with about 4% moisture content was used and the heating temperature was set at 150°C. As shown in the table, good adhesion could be achieved by heating time of 60 seconds and 10 seconds, respectively, under a pressure of at least 7.5 kg/cm²: When the pressure was increased to at least 12.5 kg/cm², the heating time could be reduced to 1 second. With the pressure further increased to 20 kg/cm², the heating time for good adhesion could be further shortened to 0.5 second.

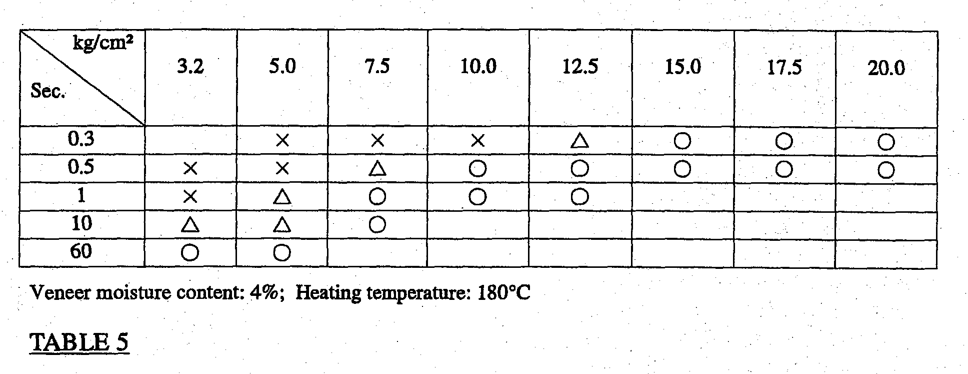

TABLE 5 shows the test results which are similar to those of TABLE 4, but differs therefrom in that the heating temperature was increased to 180°C. To observe the results, good adhesion could be achieved by heating for 60 seconds when the pressure was set at at least 3.2 kg/cm², and when the pressure was increased to at least 10 kg/cm², the heating time for satisfactory adhesion could set at 0.5 or 1 second. When the pressure was increased further to 15 kg/cm², the heating time could be further shortened to 0.3 second.

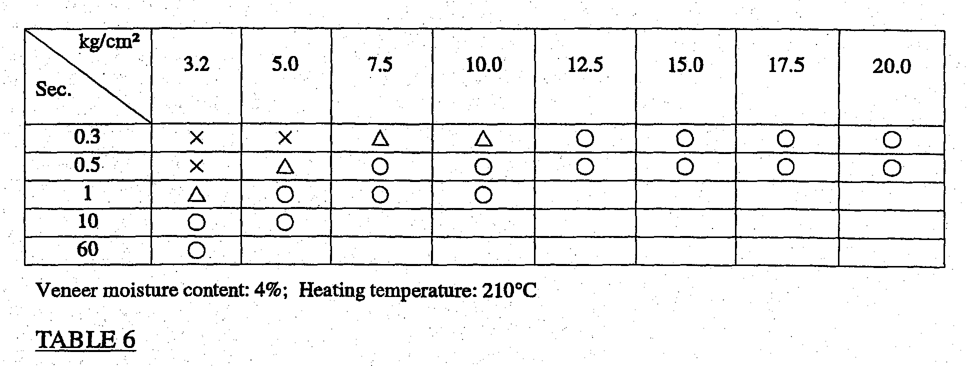

TABLE 6 shows the results of testing conducted using veneer with the same moisture content of about 4%, but under a further increased temperature of 210°C. As seen from the table, good adhesion could be achieved by heating for 10 seconds under a pressure of at least 3.2 kg/cm². When the pressure was increased to at least 10 kg/cm², the adhesive sheet could be bonded successfully to the surface by heating for only 0.5 or 1 second. When the pressure was increased further to 12.5 kg/cm², the heating time could be further reduced to 0.3 second.

Similar adhesion testing was performed using postage stamps and sticky labels to bond these water-activated sheets on paper sheets such as postcard, envelope and notebook. When the pressure during heating was set at 20 kg/cm², the testing results showed substantially intermediate values between those of TABLES 2 and 3. When the testing was made under heating temperatures of 150°C, 180°C and 210°C, the testing results corresponded to those of TABLES 4, 5 and 6, respectively.

In the testing, 60 seconds was selected as the maximum length of time for heating to ensure that heat is conducted sufficiently to the water-activated adhesive layer through the backing of the tape. The adhesive tape was heated for 0.3 second as the minimum length of time for heating because this length was considered necessary to ensure the stability of pressing. As the maximum pressure, 20 kg/cm² was selected to avoid application of excessive pressure which may damagingly compress veneer sheet thereby to invite deformation thereof. In view of smooth and stabilized operation of the fluid-operated cylinder of the testing equipment of FIG 1, 3.2 kg/cm² was selected as the minimum pressure.

As is apparent from the testing results shown in the tables, adhesion strength largely depends on the heating temperature, heating time and pressure applied during the heating. Generally, adhesion becomes stronger with an increase of the heating temperature, heating time and pressure. It is noted, however, that all these conditions do not necessarily have to be set sufficiently high or long for complete adhesion, but if any one of the three conditions is set sufficiently high or long, the other two conditions may be set at their minimum requirement values. As the minimum requirement in bonding water-activated gummed tape to the surface of dried veneer, the heating temperature should at least 100°C, the length of time for heating at least 0.3 second, and the pressure during heating at least 3.2 kg/cm², respectively. In the case of veneer, the heating temperature may be decreased with an increase in moisture content of the veneer. This would be due to a small amount of moisture in veneer which is evaporated by heating thereby to aid in bonding of the water-activated adhesive tape to the veneer surface. For this reason, the moisture content was not considered in the adhesion testing for postage stamps and sticky labels because their moisture contents could be considered substantially equal.

As a matter of course, working efficiency cannot be overlooked when bonding a water-activated adhesive sheet to dried veneer for jointing or strengthening veneer sheets. For example, when bonding the tape to the surface of veneer with a moisture content of about 12% with a pressure of about 20 kg/cm², the temperature for heating should be at least 110°C in order to achieve the same efficiency as in the conventional tape bonding method which it takes about 5 to 10 seconds before adhesion becomes available after application of water to the adhesive layer of the tape (see TABLE 1). For increasing the working efficiency, the heating temperature may be increased or, alternatively, the pressure may be reduced, as required. If the pressure is too low, however, poor bonding may result from rough surface of veneer or slight variation in thickness at the ends of two adjoining veneer sheets to be joined. Thus, it is not proper to set the pressure too low. In the testing, good results could be obtained when the pressure were set at about 10 kg/cm² or higher, and preferably at 15 kg/cm² or higher.

Some optimum combinations of bonding conditions will be shown below. In view of the working efficiency, the time of heating should be as short as practically possible, e.g. 0.3 to 2 seconds. The heating temperature and the pressure during heating that make possible successful bonding with the above heating time should be between 120°C and 175°C and 12.5 kg/cm² and 20 kg/cm², respectively.

As to the other objects than wood veneer such as postcards, envelopes and notebooks having smooth surfaces unlike the veneer, the pressure may be reduced while the heating temperature is increased, accordingly. It is noted, however, that application of excessive heat may scorch the surface as well as the adhesive sheet. For affixing postage stamps or labels, the heating temperature may be set at a level of maximum temperature of an electric iron for domestic use (usually about 210°C). It is also noted that excessive heating for bonding water-activated adhesive tape to veneer may invite excessive heat radiation from a heating member thereby causing energy loss.

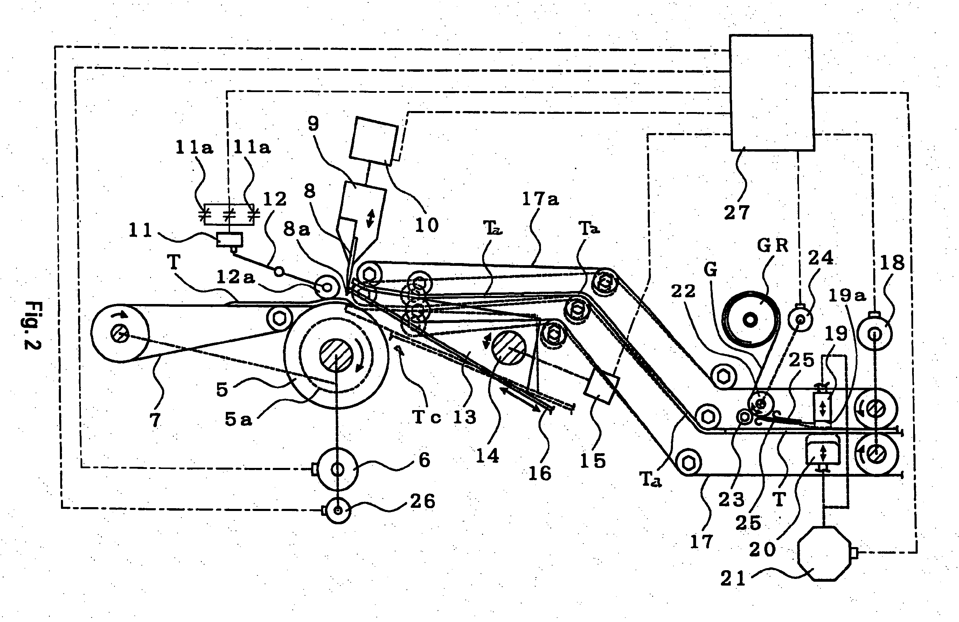

Now referring to FIG 2, the following will describe a veneer jointing apparatus for practicing the method of the present invention. As shown in the drawing, the jointing apparatus, which is shown in the left part of the drawing, is used in combination with a veneer clipper disposed upstream thereof.

The veneer clipper shown in the left part of the drawing includes a clipper knife 8 for cutting a veneer sheet T along the orientation of its wood grain. The clipper knife 8 is held by a knife holder 9 which is driven to reciprocate as indicated by double-headed arrow by an actuator 10 comprised of such devices as cam, crank and fluid-operated cylinder and connected to a control 27 which controls the reciprocating cutting motion of the clipper knife 8. Immediately below the clipper knife 8 is located an anvil roll 5 whose peripheral surface is formed by a protective layer made of rubber or like resilient material for protection of the cutting edge 8a of the clipper knife 8 from damage. The anvil roll 5 is driven to rotate intermittently in arrow direction by a suitable drive 6 such as servomotor whose operation is controlled by the control 27. Reference numeral 26 designates a rotary encoder operatively connected to the motor 6 for monitoring the rotation of the anvil roll 5 and transmitting rotation signal to the control 27. As will be referred to in later part hereof, the peripheral protective layer is formed with a plurality of circumferential narrow grooves 5a spaced in axial direction of the roll 5.

On the left-hand side of the anvil roll 5 as seen on the drawing is provided a feed conveyer 7 for feeding veneer sheets T successively toward the anvil roll 5. The conveyer 7 is driven to move intermittently by the drive 6 synchronously with and at a speed corresponding to the surface speed of the anvil roll 5.

As is apparent to those skill in the art of veneer processing, some veneer peeled from a wood block by a rotary veneer lathe has irregularly-shaped leading and trailing ends as seen in the direction in which veneer sheet T is moved by the feed conveyer 7, because the block itself from which veneer is peeled is not truly cylindrical. For jointing two veneer sheets, their irregularly-shaped ends must be cut off and removed previously so that rectangular sheets are presented to the jointing apparatus where two such veneer sheets are jointed at their straight mating ends. As is well known to those skilled in the art, the cut should be made along such a line on veneer sheet that the resulting veneer sheet is as wide as possible as measured across the wood grain thereof and is substantially uniform in thickness.

For this purpose, there is provided immediately above and adjacent to the clipper knife 8 a number of detecting rollers 12a (only one being shown in FIG 2) juxtaposed in axial direction of the anvil roll 6 and mounted to one ends of pivotal levers 12 for detecting defective irregularly-shaped leading and trailing end portions of incoming veneer sheet T. The other ends of the levers 12 are operatively connected to their associated limit switches 11 whose contact points 11a are normally closed or "on" state (only three sets of contact points being shown in FIG 2 for the sake of illustration). In operation, the moment when all contact points 11a are opened or turned "off" while the leading end portion of veneer sheet T is being moved on the anvil roll 5, the line along which a cut should be made for cutting off an irregularly-shaped leading end portion from the veneer sheet T has just reached the detecting rollers 12a. On the other hand, the moment when any one of contact points 11a is closed while the trailing end portion of the veneer sheet T is being moved on the anvil roll 5, the line along which a cut should be made for cutting off an irregularly-shaped trailing end portion from the veneer sheet T has just reached the detecting rollers 12a. That is, the line along which a cut should be made is detected by the limit switches 11 whose operation is controlled by the detecting rollers 12a which is swung up and down by incoming and outgoing veneer sheet T. Signals indicative of such detection are transmitted to the control 27 as indicated by phantom line connecting the contact points 11a and the control 27.

The veneer clipper further includes a plurality of deflecting members 13 disposed downstream of the anvil roll 5 and pivotally mounted on a rotatable shaft 14 for integral reciprocal movement between solid-line and dotted-line positions, as indicated by double-headed arrow. In the dotted-line position of the deflecting members 13, their distal end portions are placed within the aforementioned circumferential grooves 5a of the anvil roll 5, whereby a passage is formed for a rectangular veneer sheet Ta to move away from the anvil roll 5. The pivotal shaft 14 is driven to rotate by an actuator 15 which is in turn connected to the control 27.

A plurality of arms 16 is provided adjacent to the deflecting members 13, having a hook-shaped end for aiding in eliminating a veneer piece Tc cut off from the leading end portion of veneer sheet T. The eliminating arms 16 are operable in conjunction with the above deflecting members 13 and movable away from the anvil roll 5, as indicated by dotted line and double-headed arrow, to remove the cut veneer piece Tc.

Downstream of the anvil roll 5 is provided a pair of intermittently movable conveyers 17, 17a disposed one above the other and each having a plurality of conveyer belts. As indicated by solid-line and dotted line positions, the conveyers 17, 17a are swingable between these two positions synchronously and driven by a suitable drive 18 such as servomotor connected to the control 27 to move intermittently in the direction as indicated by arrows shown at a pair of drive pulleys which are connected to the drive motor 18 and at the same speed as the peripheral speed of the anvil roll 5 for conveying veneer sheets Ta, whose irregular-shaped ends have been cut off, successively to the veneer jointing apparatus.

As shown in FIG 2, the downstream portions of the conveyers 17, 17a extend horizontally, and a veneer passage is formed by and between the horizontal upper leg and lower leg of the lower and upper conveyers 17 and 17a, respectively, extending through the veneer jointing apparatus.

The veneer jointing apparatus includes a plurality of heating members 19 (only one being shown in FIG 2) each disposed between any two adjacent conveyer belts of the conveyers 17, 17a and immediately above the horizontal veneer passage. Each heating member 19 has at the bottom thereof a surface 19a which is heated by any suitable means such as electrical heater or using heating medium such as oil or steam. On the opposite side of the veneer sheet passage is located a support 20 disposed in facing relation to the surface 19a of its corresponding heating member 19 with the veneer passage interposed therebetween. The heating members 19 and the supports 20 are movable synchronously toward and away from each other as indicated by double-headed arrows by the operation of an actuator 21 which is connected to the control 27. As understood from FIG. 4, as many as nine pairs of heating members 19 and supports 20 are provided in the jointing apparatus.

The veneer jointing apparatus further includes a tape storage reel GR for each of the heating member 19, from which a water-activated adhesive tape G is unreeled intermittently. The tape G is drawn from the reel GR by a feed roll 22 which is driven intermittently by a drive 24 such as servomotor connected to the control 27 and a pinch roll 23. Between the feed roll 22 and the heating member 19 is provided a pair of tape guide members 25 for guiding the water-activated adhesive tape G toward the area between the heating member 19 and the support 20. Operation of the tape reel GR is controlled such that the tape G is drawn out from the reel GR by a predetermined length and the free end portion of the tape G is placed across the joint line of any two adjoining veneer sheets then placed immediately below the heating member 19. Though not shown specifically in the drawing, the heating member 19 is formed at the upstream bottom corner edge, as seen in the direction in which veneer sheets Ta are moved by the conveyers 17, 17a, with serration for cutting the adhesive tape G.

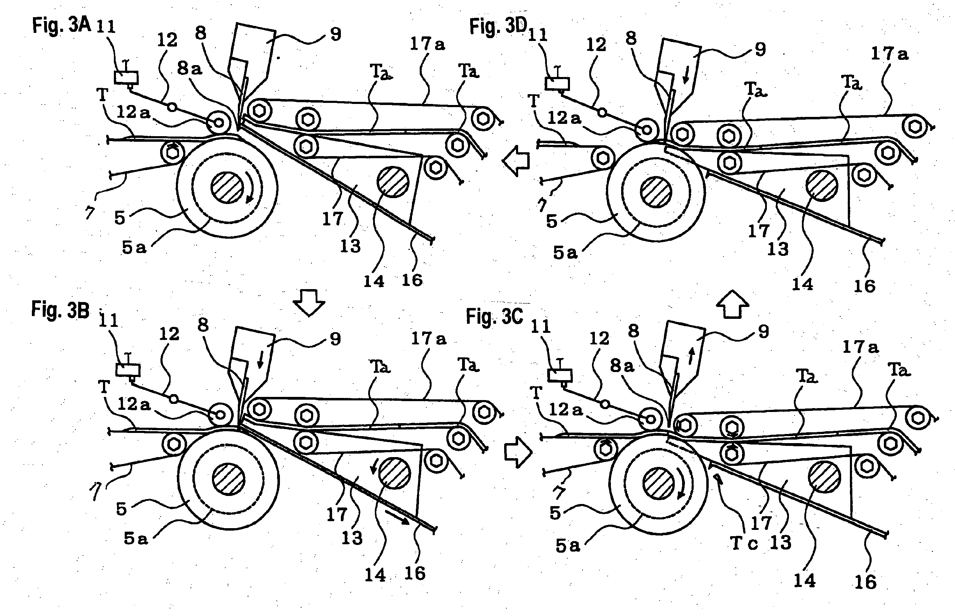

Now referring to FIGS. 3A to 3D, the following will describe more in detail the operation of the veneer clipper for cutting off irregularly-shaped leading and trailing end portions of veneer sheet T thereby to produce a rectangular veneer sheet Ta.

Clipper knife 8, deflecting members 13 and eliminating arms 16 are normally positioned as shown in FIG 3A. This drawing shows a state where a line on veneer sheet T along which a cut should be made for removal of its leading end portion has been already detected by the detecting rollers 12a and the limit switches 11, and the line for cutting is just about to reach a position on the anvil roll 5 immediately below the clipper knife 8.

When the above position is reached by the line for cutting, the anvil roll 5 and the feed conveyer 7 are stopped and, simultaneously, the clipper knife 8 is activated to move downward, as shown in FIG 3B, thereby cutting off the irregularly-shaped leading end portion from the veneer sheet T. Simultaneously, the veneer strip eliminating arms 16 and the deflecting members 13 are swung together toward the anvil roll 5 as indicated by arrow.

After the clipper knife 8 has made a cut, the eliminating arms 16 remove the cut veneer piece Tc (FIG. 3D) by moving obliquely downward away from the anvil roll 5 as shown by arrow in FIG 3B. Thereafter, the ends of the deflecting members 13 enter the circumferential grooves 5a in the anvil roll 5 and the clipper knife 8 is retracted to its standby position, as shown in FIG 3C. Activating the anvil roll 5 and the conveyers 7, 17 and 17a again to move synchronously, the veneer sheet T and its preceding veneer sheet Ta are moved forward with the cut leading end of the former veneer sheet T set in close abutment with the previously cut trailing end of the latter veneer sheet Ta, as shown in FIG. 3C.

While the veneer sheet T is being forwarded, a line on the veneer sheet T along which a second cut should be made for removal of its irregularly-shaped trailing end portion is detected by the detecting rollers 12a and limit switches 11. When this line reaches the position for cutting on the anvil roll 5 immediately below the clipper knife 8, the anvil roll 5 and the feed conveyers 7,17 and 17a are stopped and the clipper knife 8 is activated to cut off the trailing end portion of the veneer sheet T as shown in FIG 3D. After this second cut has been made, the clipper knife 8, deflecting members 13 and eliminating arms 16 are moved to their normal standby positions as shown in FIG 3A and the conveyer 7 and the anvil roll 5 are restarted to move. The rotation of the anvil roll 5 then aids in allowing cut veneer piece to drop by its own weight from the anvil roll 5.

Steps described with reference to FIGS. 3A through 3D are repeatedly to cut off irregularly-shaped leading and trailing end portions from veneer sheets successively and transfer them in end-to-end relation to the subsequent veneer jointing station.

The following will describe the operation of the veneer jointing apparatus.

Each time the joint line of any two adjoining veneer sheets Ta reaches a predetermined position below the heating member 19, the conveyers 7, 17, 17a and the anvil roll 5 are caused to stop thereby to stop veneer movement. Then, the heating members 19 and the supports 20 are activated by the actuator 21 to move toward each other to press the water-activated adhesive tape against the surface of veneer sheets Ta at their joint line while heating the adhesive tape at a predetermined temperature for a predetermined length of time. While the tape G is being pressed for heating, the feed roll 22 is driven to rotate slightly in reverse direction to pull the tape G away from the heating member 19 so that the tape G is cut by the aforementioned serration provided at the bottom comer edge of the heating member 19.

After the above predetermined length of time for heating has elapsed, the heating member 19 and the support 20 are moved away from each other to their standby position, and the operation of the anvil roll 5 and the conveyers 7, 17,17a are resumed. As a result, the water-activated adhesive tape is affixed securely to the veneer sheet surface as shown in FIG. 4.

Though not described in greater detail, as will be understood from the above description about the structure and operation of the veneer clipper and veneer jointing apparatus, operation of all devices such as drive motors and actuators is controlled by the control unit 27 so that veneer clipping and feeding and adhesive tape bonding are performed in a coordinated manner so as to achieve the intended veneer clipping and tape bonding.

Incidentally, when it is desired to cut the resulting jointed veneer sheet into the desired predetermined width, e.g. 8', as measured across the wood grain of veneer, another veneer clipper designed for that purpose may be provided downstream of the jointing apparatus. Alternatively, the veneer clipper of FIG 2 may be so constructed and designed that veneer width is counted by any suitable means and a cut is made each time the desired width is reached, independently of the cuts for removal of irregularly-shaped end portions. In such a case, it may be so controlled by the control unit 27 that the veneer jointing apparatus skips the tape bonding operation accordingly.

The above-described veneer jointing apparatus for practicing the method of the present invention is stationary, i.e. the heating member 19, the support 20, the tape storage reel GR and its related parts are all disposed stationary. In such a stationary apparatus, operation of the anvil roll 5 and conveyers 7, 17 and 17a must be stopped temporarily for suspending veneer movement during the adhesive tape bonding operation.

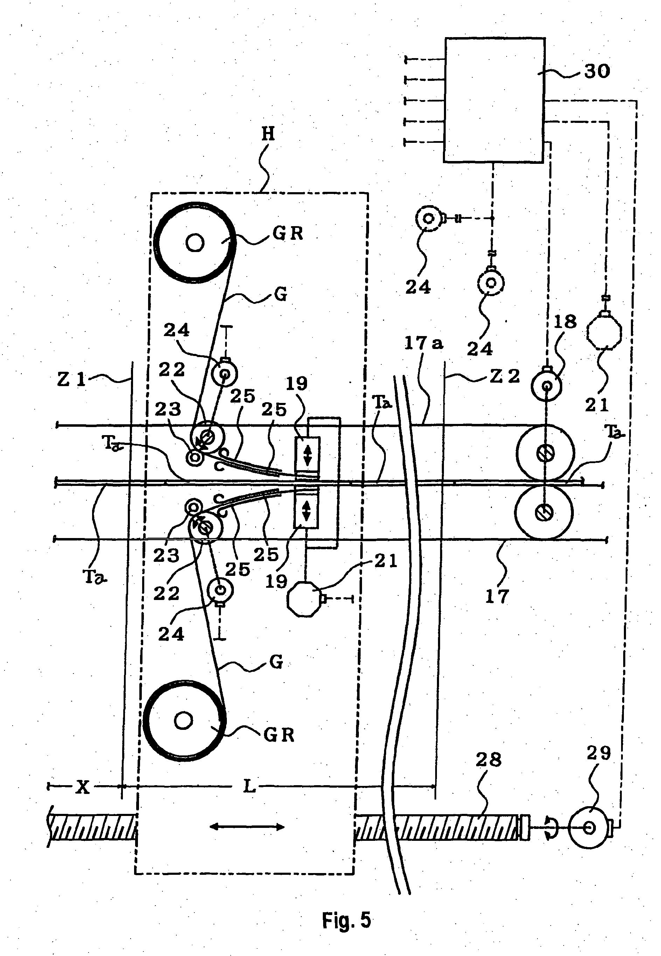

Veneer jointing apparatus shown in FIG 5 is a modification designed to overcome such drawback. For this purpose, the jointing apparatus of FIG 5 has the heating member 19, actuator 21, tape storage reel GR, feed roll 22, motor 24 and other parts and devices integrated as a movable unit H. This veneer jointing unit H dispenses with the support 20 and, instead, the heating member 19 and the parts or devices for supplying water-activated adhesive tape are provided in pairs disposed one above the other and the paired heating members 19 are movable toward and away from each other so that the adhesive tape G is affixed to the opposite surfaces of veneer sheet Ta. The jointing unit H is driven by any suitable means such as screw 28 which is in turn driven by a servommotor 29 whose operation is controlled by a control 30, to move over a region with a length L defined by two vertical planes Z1 and Z2 spaced in the direction in which veneer sheets Ta are conveyed. The left-side vertical plane Z1 is located at a predetermined distance X as measured from any reference position defined by the cutting edge 8a of clipper knife 8 or the detecting rollers 12a. The unit H is normally placed at its leftmost standby position as seen in the drawing where the heating members 19 lie adjacent to the left plane Z1.

When a joint line of any two adjoining veneer sheets Ta comes within the region L, the unit H is activated to move to the joint line and the heating members 19 are operated to press the water-activated adhesive tapes on opposite surfaces of the veneer sheets Ta for a predetermined length of time while moving together with the veneer sheets Ta being moved by the conveyers 17, 17a. If there is one or more other joint lines in the region L after completion of the above jointing operation, the unit H is moved to the joint line which is then positioned most downstream in the region L and operated to bond the tapes to veneer surfaces in the same manner. If there exists no joint line in the region L, the jointing unit H is moved to its standby position. It is noted that veneer movement by the conveyers 17,17a is caused to stop whenever the clipper makes a cut, and the jointing unit H, if it is then in motion, is also stopped until the cut is completed and conveyer operation is resumed.

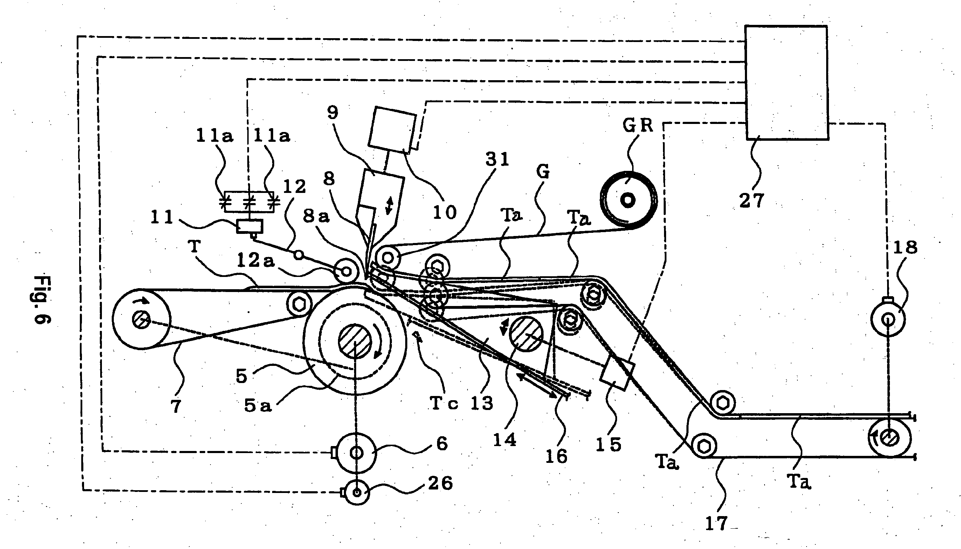

FIG 6 shows still another form of veneer jointing apparatus for practicing the method of the invention. This apparatus differs from that shown in FIG. 2 in that water-activated adhesive tape is bonded to the veneer surface in the form of a continuous strip. In this apparatus, the upper veneer conveyer 17a of FIG 2 is removed and, instead, there is provided a heating member 31 in the form of a roll to which adhesive tape G unwound from the reel GR is supplied. The heating roll 31 is operable to move to its operative position as shown in dotted line where the roll 31 presses the joint line between two veneer sheet on the anvil roll 5. Alternatively, though no shown in the drawing, the upper veneer conveyer 17a of FIG 2 may remain as it is and the heating roll 31 may be located between any two adjacent conveyer belts of the conveyer 17a.

As will be appreciated by those skilled in the art, the veneer clipper and joint apparatuses may take any other forms. For example, the clipper may be of a shear type which dispenses with the anvil roll 5 of FIG 2. The veneer jointer may be provided adjacent to the clipper such that a heating member is located at any suitable position between the clipper knife 8 and the veneer detecting roller 12a and the anvil roll 5 serves as the support 20 of FIG 2 so that veneer clipping and veneer jointing are performed alternately on the anvil roll 5. Furthermore, it may be so arranged veneer sheets previously cut into a rectangular shape are arranged in end-to-end relation while they are being transferred toward a veneer jointing apparatus where they are then jointed.

In affixing postage stamp or label on a postcard, envelope or notebook, an apparatus similar to the adhesion testing equipment shown in FIG 1 or similar device may be used. Alternatively, affixing may be accomplished manually using an electric iron. According to the experiment conducted by the inventor, bonding a water-activated adhesive sheet to the surface of a metal such as aluminum could be accomplished successfully. The method of the present invention is applicable to water-activated adhesive sheet having a backing which is made of any material other than paper, such as cloth, wood, metal, heat-resistant plastic.

As is now apparent from the foregoing description, the method according to the present invention makes possible affixing or bonding a water-activated adhesive sheet to the desired surface of an object without moistening the water-activated adhesive layer of the sheet, but merely by application of pressure and heat to the adhesive sheet. Therefore, the bonding process can be free from problems due to the time required before adhesion becomes effective after application of water to the adhesive layer. Furthermore, problems encountered in the conventional method such as delayed bonding due to excessive moistening or failure in bonding because of early drying of moistened adhesive sheet can be forestalled. Additionally, dispensing with the process of moistening can simplify the bonding operation. In case when the backing of the adhesive sheet is made of paper, since no water is applied, there is no fear that its strength will be decreased by application of water. Furthermore, the use of inexpensive water-activated adhesive tape for jointing or strengthening of veneer sheets can contribute to reduction of cost of veneer processing.

## Claims

1. Method of bonding an adhesive sheet having a backing and a layer of water-activated adhesive coated on one side of said backing to the surface of an object, comprising pressing said adhesive sheet against the surface of the object with said water-activated adhesive layer in facing relation to said surface without moistening said water-activated adhesive layer and simultaneously heating said adhesive sheet.

2. Method according to claim 1, wherein said pressing and heating are performed by a heating member which is heated to a predetermined temperature.

3. Method according to claim 2, wherein said heating of the adhesive sheet is performed at a temperature of at least 100°C.

4. Method according to claim 2, wherein said heating of the adhesive sheet is performed for at least 0.3 second.

5. Method according to claim 2, wherein said pressing of the adhesive sheet is performed under a pressure of at least 3.2 kg/cm².

6. Method according to claim 2, wherein said adhesive sheet is heated at a temperature between 120°C and 175°C for a length of time between 0.3 and 2 seconds under a pressure between 12.5 and 20 kg/cm².

7. Method according to claim 2, 3, 4, 5 or 6, wherein said object having the surface to which said adhesive sheet is bonded includes wood veneer.

8. Method according to claim 7, wherein said wood veneer has been dried to such an extent that is suitable for lamination to produce plywood, laminated veneer lumber (LVL) or other wood composite materials.

9. Method according to claim 7, wherein said wood veneer has been dried to a moisture content of 15% or less.

10. Method according to claim 2, wherein said backing of the adhesive sheet is made of paper.
